# EUROPEAN PATENT SPECIFICATION

(11) **EP 0 317 261 B1**
(45) Date of publication and mention of the grant of the patent: **29.06.1994**
(21) Application number: 88310770.8
(22) Date of filing: 15.11.1988
(51) Int. Cl.: G02F 1/13

(54) **Liquid crystal display device for projection apparatus**
Flüssigkristallvorrichtung für eine Projektionseinrichtung
Dispositif à cristal liquide pour appareil de projection

(30) Priority: 20.11.1987 JP 294786/87
(43) Date of publication of application: 24.05.1989
(73) Proprietor: SONY CORPORATION, Tokyo 141 (JP)
(72) Inventor: Morita, Tetsuya c/o Sony Corp., Shinagawa-ku Tokyo 141 (JP); Urabe, Tetsuo c/o Sony Corp., Shinagawa-ku Tokyo 141 (JP)
(74) Representative: Purvis, William Michael Cameron

(56) References cited:
- EP-A- 0 087 477
- EP-A- 0 094 432
- GB-A- 2 156 537
- US-A- 422 732
- PATENT ABSTRACTS OF JAPAN, vol. 8, no. 163 (P-290)[1600], 27th July 1984; & JP-A-59 60 421

## Description

The invention relates generally to liquid crystal display devices for projection apparatus and more particularly to a liquid crystal display device of a laser beam heat write-in kind in which an image can be written and displayed by the irradiation of laser beams.

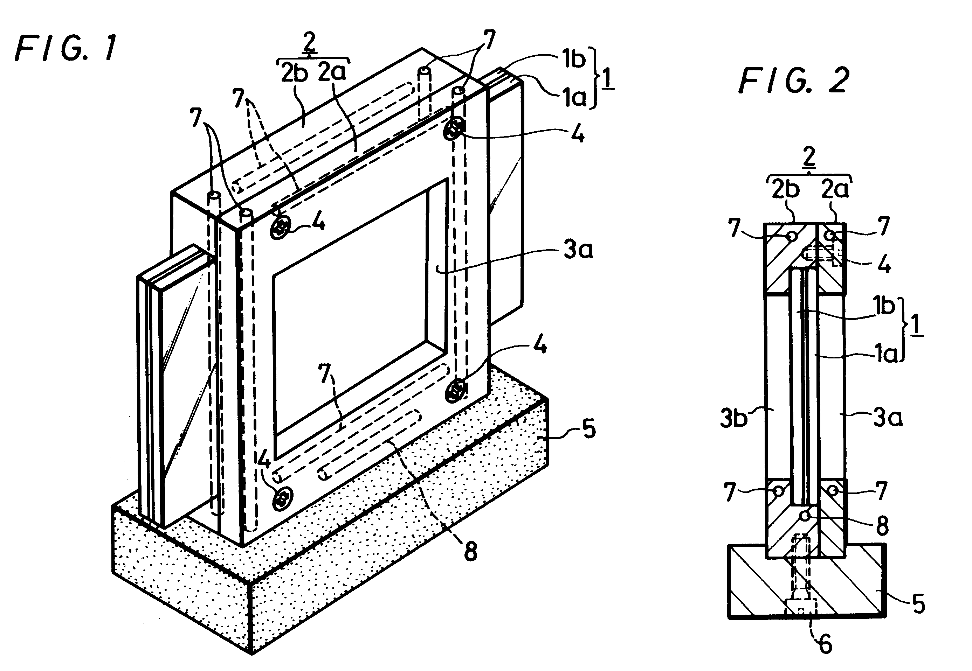

FIG. 1 is a perspective view illustrating an example of a liquid crystal display device of a laser beam heat write-in of previously proposed kind in which an image is written and displayed by the irradiation of a laser beam. FIG. 2 is a longitudinal cross-sectional view taken through the central line of FIG. 1.

Referring to FIGS. 1 and 2, the liquid crystal display device is formed such that a transparent electrode (not shown) is deposited on the inner surfaces of opposing transparent panels 1a and 1b made of glass plates. The peripheral edges of these transparent panels 1a and 1b are sealed, liquid-tight, with a predetermined spacing therebetween for example by frit-sealing. Liquid crystal is injected in the space between the transparent panels 1a and 1b and then sealed whereby a liquid crystal display panel 1 is formed. The liquid crystal display panel 1 is supported by a frame 2 made of, for example, aluminium. The frame 2 comprises rectangular frame members 2a and 2b which are joined together by fastening screws 4. The rectangular frame members 2a and 2b have openings 3a and 3b therein through which the effective display area of the liquid crystal display panel 1 is exposed to the outside. A base table 5 is moulded of, for example, a resin and supports the frame 2 by a screw 6.

Within the frame 2, a plurality of linear-shaped heaters 7 are embedded, which are heated by supplying electrical power thereto. Reference numeral 8 denotes a temperature detecting element such as a thermocouple embedded into the frame 2. The temperature detecting element 8 is used to detect the temperature of the frame 2, and on the basis of the detected temperature, the power supply to the heaters 7 is controlled, whereby the liquid crystal display panel 1 is held at a predetermined bias temperature. The frame portions 2a and 2b of the frame 2 are both in close contact with the transparent panels 1a and 1b of the liquid crystal display panel 1 and the thus heated frame 2 can hold at least the effective display area of the liquid crystal display panel 1 at the predetermined bias temperature.

In the thus arranged liquid crystal display device of laser beam heat write-in kind, a laser beam is irradiated on the liquid crystal display panel 1 to cause, for example, phase change of the liquid crystal to occur only at the liquid crystal portion irradiated with the laser beam. Thus, optical transmission degree at that irradiated portion changes as compared with that of other portions thereby optically to display an image. Since at least the effective display area of the liquid crystal display panel 1 is held at the predetermined bias temperature as set forth above, the liquid crystal display panel 1 can be written with an image at high speed and with high resolution by a small write-in laser beam.

In the above-described liquid crystal display device, however, the liquid crystal display panel 1 is brought into contact with the heated frame 2 at its peripheral portion of the effective display area and the liquid crystal display panel 1 is substantially heated from its peripheral portion. Consequently, the heating temperature at the middle portion of the liquid crystal display panel 1 is lower than that at the peripheral portion thereof. In fact, the temperature difference therebetween can exceed 2°C. Thus, the image cannot be written uniformly in the respective areas of the effective display area of the liquid crystal display panel 1 and hence the image is displayed with scattering, thus degrading the quality of a displayed image.

According to the invention there is provided a liquid crystal display device for projection apparatus, comprising a liquid crystal display panel of a laser heat write-in kind; and a frame which has heating means and supports the liquid crystal display panel;
characterised in that two light transmission panels are located in opposing relation to the opposite outer surfaces of the liquid crystal display panel with a predetermined distance therebetween thereby to form, on each side, a substantially air-tight space in contact with at least an effective display area of the liquid crystal display panel whereby, in cooperation with the frame, the light transmission panels each hold the respective air-tight space at a predetermined temperature.

Such a liquid crystal display device can solve the problem of a temperature difference between a central portion and a peripheral portion of an effective display area of a liquid crystal panel and thereby prevent the quality of a displayed image from being degraded.

The invention is diagrammatically illustrated by way of example in the accompanying drawings in which:-
FIG. 1 is schematic perspective view of a liquid crystal display device of previously proposed kind;
FIG. 2 is a cross-sectional view taken along a vertical line through the central portion of the liquid crystal display device of FIG. 1;
FIG. 3 is a schematic perspective view of an embodiment of a liquid crystal display device according to the invention;
FIG. 4 is a longitudinal cross-sectional view taken through the central portion of the liquid crystal display device of FIG.3; and
FIG. 5 is an illustration used to explain one of the ways in which an image can be written-in and read from the liquid crystal display device of the present invention.

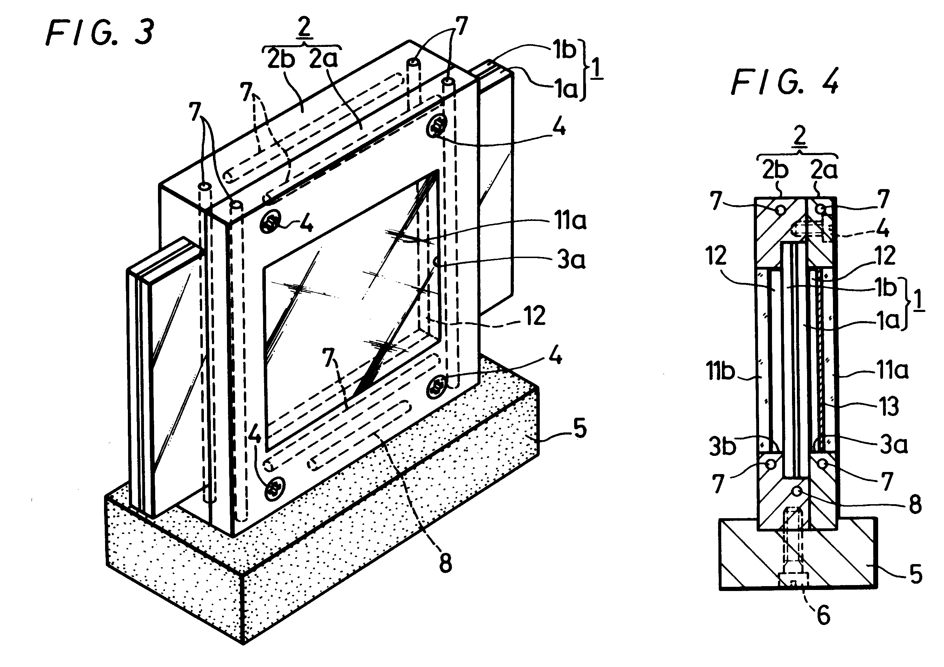

In FIGS. 3 and 4, like parts corresponding to those of FIGS. 1 and 2 are marked with the same references and therefore will not be further described in detail.

Referring to FIGS. 3 and 4, also in this embodiment, the frame 2 comprises the pair of opposing frame portions 2a and 2b. The pair of opposing frame portions 2a and 2b sandwiched therebetween the liquid crystal display panel 1. The frame portions 2a and 2b are integrally joined with each other by fastening screws 4 to form the frame 2. The frame 2 is mounted on the base table 5 by screws 6.

The plurality of linear-shaped heaters, i.e., the heating means 7 are embedded within the frame 2 along the left and right edges and the upper and lower edges thereof. When these heating means 7 are supplied with electric power, they can heat the frame 2, i.e., the frame portions 2a and 2b. The temperature detecting element 8 such as the thermocouple is also embedded into the frame 2 to detect its temperature. In response to the temperature of the frame 2 detected by the temperature detecting element 8 , the power supply to the heating means 7 is controlled whereby the frame 2 can be held at the predetermined temperature.

In the openings 3a and 3b formed through the respective frame portions 2a and 2b of the frame 2, panels made of material having a light transmission characteristic, e.g. glass plates 11a and 11b, are engaged and respectively spaced apart from both outer surfaces of the display panel 1 by a predetermined distance such that substantially air-tight spaces 12 are respectively formed by the cooperation of the frame 2 and the glass plates 11a, 11b between the outer surface of display panel 1 and the inner surfaces of glass plates 11a, 11b. The spaces 12 each correspond to at least the effective display area of display panel. On the side opposite to the side from which the writing laser beam is introduced into the liquid crystal display panel 1, an infrared ray absorbing filter 13 is mounted on the inside surface of the glass panel 11a or the glass panel 11a can be given the infrared ray absorbing property by mixing a suitable substance thereinto.

The liquid crystal display panel 1 can be held at a uniform bias temperature of, for example, about 52°C by heating the heating means 7 embedded in the frame 2.

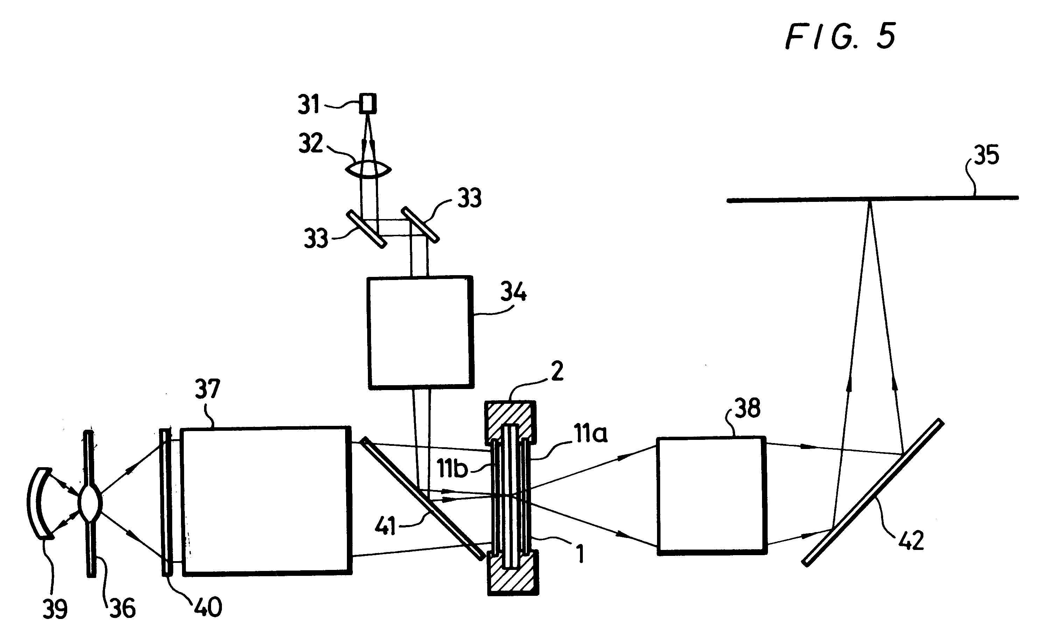

An example of how to write-in and read an image from such a liquid crystal display device will be described with reference to FIG. 5.

Referring to FIG.5, there is shown a laser light source 31 such as a semiconductor laser diode to emit a writing laser beam. The laser beam emitted from the laser light source 31 is modulated in response to an image to be displayed on the liquid crystal display panel 1. The modulated laser beam is collimated by a lens 32 and introduced, for example, into two deflectors (so-called galvao scanners) 33, whereby it is deflected in the horizontal and vertical directions or in a two-dimensional fashion. Then the laser beam is focused on the liquid crystal display panel 1 by a focusing lens 34 while the laser beam is deflected so as to be scanned in the horizontal and vertical directions by the deflectors 33. In this way, an image to be displayed is stored in the liquid crystal display panel 1 by heating caused by the irradiation of the laser beam. Then, the optical image written in the liquid crystal of the liquid crystal display panel 1 as its phase change is projected onto a screen 35 by a projection optical system. In the projection optical system, a light from a light source 36 formed of, for example, a metal halide lamp, is irradiated through a condenser lens 37 to the liquid crystal display panel 1 and the light which has travelled therethrough is projected onto the screen 35 via a projection lens system 38. In the embodiment shown, a concave surface reflection mirror 39 is used effectively to utilise the light from the light source 36. An infrared ray absorbing filter 40 protects the condenser lens 37 from being damaged by the infrared rays from the light source 36. An infrared ray absorbing filter 40 protects the condenser lens 37 from being damaged by the infrared rays from the light source 36. A dichroic mirror 41 introduces the light from the light source 36 into the liquid crystal display panel 1. Also, this dichroic mirror 41 reflects the laser beam from the laser light source 31 so that the reflected laser beam travels towards the liquid crystal display panel 1 upon writing.

A mirror 42 directs the light travelling through the liquid crystal display panel 1 onto the screen 35.

According to the above-mentioned arrangement, the laser beam can be written in the liquid crystal display panel 1 and then the optical image can be projected onto the screen 35. If the infrared ray absorbing filter 13 is located on the side of the liquid crystal display panel 1 opposite to the side from which the laser beam is incident on the liquid crystal display panel 1, the infrared ray absorbing filter 13 can introduce the infrared rays, i.e., heat waves, into the light transmission panel 11a effectively so that the temperature in the air-tight space 12 can be held more uniformly at a predetermined value.

Since the substantially air-tight space 12 is formed in contact with the effective display area of the liquid crystal display panel 1, the temperature within this air-tight space 12 can be held substantially uniform in each portion owing to convection. Thus, the entire regions over the central portion and the peripheral portion of the effective display area of the liquid crystal display panel 1 can be held at a substantially uniform temperature. For example, the difference, between the temperatures of the middle portion and the peripheral portion of the effective display area of the liquid crystal display panel 1 can be reduced to 0.4 to 0.5°C, and a display of sufficiently high quality can be obtained.

## Claims

1. A liquid crystal display device for projection apparatus, comprising a liquid crystal display panel (1) of a laser heat write-in kind; and a frame (2) which has heating means (7) and supports the liquid crystal display panel (1);
characterised in that two light transmission panels (11a, 11b) are located in opposing relation to the opposite outer surfaces of the liquid crystal display panel (1) with a predetermined distance therebetween thereby to form, on each side, a substantially air-tight space (12) in contact with at least an effective display area of the liquid crystal display panel (1) whereby, in cooperation with the frame (2), the light transmission panels (11a, 11b) each hold the respective air-tight space (12) at a predetermined temperature.

2. A liquid crystal display device according to claim 1, further comprising an infrared ray absorbing filter (13) provided on the inner surface of one (11a) of the light transmission panels.

3. A liquid crystal display device according to claim 1 or claim 2, wherein one of the light transmission panels (11a) itself has an infrared ray absorbing property.

4. A liquid crystal display device according to claim 2, wherein the light transmission panel (11a) provided with the infrared absorbing filter (13) is located on the side of the liquid crystal display panel opposite to the side from which a laser beam is applied to the liquid crystal display panel (1).

5. A liquid crystal display device according to claim 3, wherein the light transmission panel (11a) having an infrared ray absorbing property is located on the side of the liquid crystal display panel (1) opposite to the side from which a laser beam is applied to the liquid crystal display panel (1).

## Patentansprüche

1. Flüssigkristallanzeigevorrichtung für eine Projektionseinrichtung mit einem Flüssigkristallanzeigefeld (1) für das Einschreiben mittels einer durch einen Laser erzeugten Wärme; und einem Rahmen (2), welcher Heizmittel (7) besitzt und das Flüssigkristallanzeigefeld (1) trägt;
dadurch gekennzeichnet, daß zwei Lichtdurchgangsscheiben (11a, 11b) gegenüberstehend in bezug auf die gegenüberliegenden äußeren Oberflächen des Flüssigkristallanzeigefeldes (1) mit einem vorgegebenen Abstand dazwischen angeordnet sind, um auf diese Weise auf jeder Seite einen im wesentlichen luftdichten Zwischenraum (12) auszubilden, welcher mit mindestens einem wirksamen Anzeigebereich des Flüssigkristallanzeigefeldes (1) in Kontakt steht, wodurch in Zusammenwirkung mit dem Rahmen (2) jede der Lichtdurchgangsscheiben (11a, 11b) den jeweiligen luftdichten Zwischenraum (12) auf einer vorgegebenen Temperatur hält.

2. Flüssigkristallanzeigevorrichtung nach Anspruch 1, welche weiterhin ein Infrarotstrahlen absorbierendes Filter (13) aufweist, das an der inneren Oberfläche einer (11a) der Lichtdurchgangsscheiben vorgesehen ist.

3. Flüssigkristallanzeigevorrichtung nach Anspruch 1 oder 2, bei der eine der Lichtdurchgangsscheiben (11a) selbst die Fähigkeit besitzt, Infrarotstrahlen zu absorbieren.

4. Flüssigkristallanzeigevorrichtung nach Anspruch 2, bei der die mit dem infrarotabsorbierendem Filter (13) versehene Lichtdurchgangsscheibe (11a) auf der Seite des Flüssigkristallanzeigefeldes, welche der Seite gegenüberliegt, von welcher ein Laserstrahl bei dem Flüssigkristallanzeigefeld (1) Anwendung findet, angeordnet ist.

5. Flüssigkristallanzeigevorrichtung nach Anspruch 3, bei der die Lichtübertragungsscheibe (11a) mit der Fähigkeit, Infrarotstrahlen zu absorbieren, auf der Seite des Flüssigkristallanzeigefeldes (1), welche der Seite gegenüberliegt, von welcher ein Laserstrahl bei dem Flüssigkristallanzeigefeld (1) Anwendung findet, angeordnet ist.

## Revendications

1. Dispositif d'affichage à cristaux liquides pour appareil de projection, comprenant un panneau d'affichage à cristaux liquides (1) d'un type à écriture thermique par laser ; et un cadre (2) qui comporte des moyens de chauffage (7) et qui supporte le panneau d'affichage à cristaux liquides (1),
caractérisé en ce que deux panneaux de transmission de lumière (11a, 11b) sont positionnés de manière à se faire face par rapport aux surfaces externes opposées du panneau d'affichage à cristaux liquides (1), une distance prédéterminée les séparant, afin de former, sur chaque côté, un espace sensiblement étanche à l'air (12) en contact avec au moins une zone d'affichage effective du panneau d'affichage à cristaux liquides (1) et ainsi, en coopération avec le cadre (2), les panneaux de transmission de lumière (11a, 11b) maintiennent chacun l'espace étanche à l'air respectif (12) à une température prédéterminée.

2. Dispositif d'affichage à cristaux liquides selon la revendication 1, comprenant en outre un filtre absorbeur de rayons infrarouges (13) prévu sur la surface interne de l'un (11a) des panneaux de transmission de lumière.

3. Dispositif d'affichage à cristaux liquides selon la revendication 1 ou 2, dans lequel l'un des panneaux de transmission de lumière (11a) présente lui-même une propriété d'absorption des rayons infrarouges.

4. Dispositif d'affichage à cristaux liquides selon la revendication 2, dans lequel le panneau de transmission de lumière (11a) muni du filtre absorbeur d'infrarouges (13) est positionné sur le côté du panneau d'affichage à cristaux liquides opposé au côté depuis lequel un faisceau laser est appliqué sur le panneau d'affichage à cristaux liquides (1).

5. Dispositif d'affichage à cristaux liquides selon la revendication 2, dans lequel le panneau de transmission de lumière (11a) présentant une propriété d'absorption des rayons infrarouges est positionné sur le côté du panneau d'affichage à cristaux liquides (1) opposé au côté depuis lequel un faisceau laser est appliqué sur le panneau d'affichage à cristaux liquides (1).
